# EUROPEAN PATENT APPLICATION

(11) **EP 4 101 818 A1**
(43) Date of publication of application: **14.12.2022**
(21) Application number: 22177715.4
(22) Date of filing: 08.06.2022
(51) Int. Cl.: C01G 39/00, B22F 1/05, B22F 9/22, C22C 1/04, B33Y 70/00

(54) **METHOD FOR PREPARING LARGE SIZE MOLYBDENUM POWDER**

(30) Priority: 09.06.2021 CN 202110644480
(71) Applicant: Zhengzhou University, Zhengzhou City, Henan 450001 (CN)
(72) Inventor: LI, Qingkui, Zhengzhou City, Henan 450001 (CN); WU, Xiaochao, Zhengzhou City, Henan 450001 (CN); ZHANG, Jing, Zhengzhou City, Henan 450001 (CN); YANG, Kaijun, Zhengzhou City, Henan 450001 (CN); WANG, Chengduo, Zhengzhou City, Henan 450001 (CN); HE, Jilin, Zhengzhou City, Henan 450001 (CN)
(74) Representative: Ipside

(57) **Abstract**

A method for preparing large size molybdenum powder, comprises: large size β-type ammonium tetramolybdate monocrystal particle with size between 5~100µm is sintered at temperature of 350~400°C, molybdenum trioxide is formed. The molybdenum trioxide is transformed to molybdenum powder of over 5µm by two-stage hydrogen reduction. Method for preparing large size β-type ammonium tetramolybdate monocrystal particle comprises: industrial ammonium molybdate, ammonia, and de-ionized water are used to prepare ammonium molybdate solution with concentration of 0.2-0.6 g/ml, pH of the ammonium molybdate solution adjusted to 1-2, temperature adjusted to 70~90°C, the first ammonium molybdate solution is obtained. The first ammonium molybdate solution is stirred for 3~5min, constant temperature crystallizing, filtering to obtain the β-type ammonium tetramolybdate crystal seed. Industrial ammonium molybdate, ammonia, de-ionized water are used to prepare ammonium molybdate solution with concentration of 0.2-0.6 g/ml; pH of the ammonium molybdate solution is adjusted to 5-7, temperature to 70~90°C, the second ammonium molybdate solution is obtained. The β-type ammonium tetramolybdate crystal seed in the second ammonium molybdate solution standing still at room temperature, large size β-type ammonium tetramolybdate monocrystal particle is formed.

## Description

### Technical Field

This application belongs to additive manufacturing field, specifically, concerning method for preparing large size molybdenum powder.

### Background of the Invention

Now, preparation methods of large size molybdenum powder exiting in market include mechanical granulation method, plasma granulation method and fluidized bed reduction method.

For mechanical granulation method, certain kind of adhesive is mixed with molybdenum powder, and the mixture is mechanically pressed in mould or pelletizer, and then the pressed mixture is deprived of adhesive and is sintered in vacuum sintering furnace, finally molybdenum particle cluster is formed. The method is simple, but the fluidity of molybdenum particle cluster is low.

For plasma granulation method, the molybdenum powder is heated in the center of plasma flame with temperature of several thousand degrees, the surface of powder is melted and the powder begins to spheroidize during its free falling, and the free falling metal droplet condenses by cooling media to large size molybdenum powder. The molybdenum powder product obtained by this method has preferable physical characteristics, but instrument investment is excessive.

In recent years, S. M. Tuominen et al reduced MoO₃ powder or particle to molybdenum powder by two-stage fluidized bed reduction process. The first stage reduction is conducted at 400~650°C with ammonia as reductant to reduce MoO₃ into MoO₂. The second stage reduction is conducted at 700~1400°C with hydrogen as reductant to reduce MoO₂ into Mo. Mo obtained by this method has good fluidity, high sintered density, but low practicability, and still does not find practical application in additive manufacturing.

Among preparation techniques for preparing large size molybdenum powder existing in market, mechanical granulation technology is simple to operate, but its product has low fluidity, not propitious to 3D printing and hot spraying application; molybdenum powder prepared by plasma granulation technology and fluidized bed reduction technology has good physical property, but their operation is complex, and instruments investment is huge, cost of production is high, not applicable for industrial mass production.

### Summary of the Invention

In view of problems above mentioned, in one aspect, some embodiments disclose a method for preparing a large size molybdenum powder, the method comprises:
a large size β-type ammonium tetramolybdate monocrystal particle with size between 5~ 100µm is sintered at a temperature of 350~400°C to obtain a molybdenum trioxide;
the molybdenum trioxide is transformed to a molybdenum powder by two-stage hydrogen reduction, particle size of the molybdenum powder is larger than 5µm.

Some embodiments disclose the method for preparing the large size molybdenum powder, therein, the large size β-type ammonium tetramolybdate monocrystal particle is prepared by:
using industrial ammonium molybdate, ammonia,and de-ionized water to prepare ammonium molybdate solution with a concentration of 0.2~0.6 g/ml; pH of the ammonium molybdate solution is adjusted to 1~2, temperature of the solution is adjusted to a first temperature of 70~90°C to obtain the first ammonium molybdate solution;
stirring the first ammonium molybdate solution at the first temperature for 3~5min, constant temperature crystallizing and filtering to obtain a β-type ammonium tetramolybdate crystal seed;
using industrial ammonium molybdate, ammonia, and de-ionized water to prepare ammonium molybdate solution with a concentration of 0.2~0.6 g/ml; pH of the ammonium molybdate solution is adjusted to 5~7, temperature is adjusted to 70~90°C to obtain a second ammonium molybdate solution;
putting the β-type ammonium tetramolybdate crystal seed obtained in the second ammonium molybdate solution, standing at room temperature, the β-type ammonium tetramolybdate crystal seed grows into the large size β-type ammonium tetramolybdate monocrystal particle with size between 5~100µm.

Some embodiments disclose the method for preparing the large size molybdenum powder, therein nitric acid is used to adjust pH of the first ammonium molybdate solution to 1~2, nitric acid is used to adjust pH of the second ammonium molybdate solution to 5~7.

Some embodiments disclose the method for preparing the large size molybdenum powder, therein the method further comprises drying the β-type ammonium tetramolybdate crystal seed obtained at dry temperature of not exceeding 60°C.

Some embodiments disclose the method for preparing the large size molybdenum powder, therein the size of the industrial ammonium molybdate is 0.7~1.1 µm, D50 is 0.99 µm.

Some embodiments disclose the method for preparing the large size molybdenum powder, therein, the first temperature of the first ammonium molybdate solution and the second temperature of the second ammonium molybdate solution are controlled to be the same.

Some embodiments disclose the method for preparing the large size molybdenum powder, therein the concentration of the first ammonium molybdate solution is controlled to be the same as the concentration of the second ammonium molybdate solution.

Some embodiments disclose the method for preparing the large size molybdenum powder, therein the two-stage hydrogen reduction specifically comprises:
the first stage reduction: the molybdenum trioxide is reduced by wet hydrogen at the first temperature of 500~650°C, with hydrogen flow rate of 100~200ml/min, wet hydrogen temperature of 40~60°C;
the second stage reduction: the product from the first stage reduction is reduced by wet hydrogen at the second temperature of 900~1050°C, with hydrogen flow rate of 100~ 200ml/min, wet hydrogen temperature of 40~60°C.

In another aspect, some embodiments provide a large size molybdenum powder, therein the powder is prepared by the method for preparing the large size molybdenum powder; the size of the molybdenum powder is larger than 5µm.

By the method disclosed in embodiments, taking advantage of morphological heritability during reduction of β ammonium tetramolybdate, taking large size β ammonium tetramolybdate monocrystal particle as raw material, raw material is processed by sintering and two-stage hydrogen reduction, molybdenum powder with size of larger than 5µm is obtained. Meanwhile, industrial ammonium molybdate is used as raw material to controllably obtain the large size β ammonium tetramolybdate monocrystal particle with size of 5~100µm is . The method process is simple and easy to operate, has promising application in molybdenum additive manufacturing.

### Brief description of the Drawings

Fig. 1 is SEM image of the molybdenum powder of embodiment 1.
Fig. 2 is particle size distribution of the molybdenum powder of embodiment 1.
Fig. 3 is SEM image of the molybdenum powder of comparative embodiment 1.
Fig. 4 is particle size distribution of the molybdenum powder of comparative embodiment 1.
Fig. 5 is topographic image of industrial ammonium molybdate in embodiment 2.
Fig.6 is schematic images of different growth stages of large size β-type ammonium tetramolybdate monocrystal particle in embodiment 2.
Fig. 7 is topographic images of large size β-type ammonium tetramolybdate monocrystal particle in different growth stages in embodiment 2.
Fig.8 is schematic diagram of layer growth theory of monocrystal particle.

### Detailed Description of Embodiments

Here in present disclosure, the expression of "embodiment", as exemplary description of any embodiment, is not necessarily explained as better or greater one than any other embodiment. Performance test is conducted by using ordinary method in the art, unless expressly stated otherwise. Understandably, the expression in present disclosure is merely to explain the specific embodiment, not to limit the scope of present disclosure.

Unless stated otherwise, technical and scientific phrases in present disclosure have the same meaning that the person with ordinary skill in the art understands in ordinary way. The test methods and technical tools, not expressly stated in present disclosure, usually refer to ordinary method and tool generally used in the art.

In present disclosure, phrases, like "basically", "about", are used to describe small variation. For example, they may mean less than or equal to the variation range of ±5%, or less than or equal to ±2%, or less than or equal to ±1 %, or less than or equal to ±0.5%, or less than or equal to ±0.2%, or less than or equal to ±0.1%, or less than or equal to ±0.05%. Quantity and other data can be expressed as number range of this type. Such range expression is used serving for purpose of convenience and clarity, and can be explained as not only including figures to define the number range, but also the individuals in the number range, or the sub-range in the number range. For example, number range of "1~5%" can be understand as including 1%, 5% expressly listed, and individual figure, like "2%","3.5%" ,"4%"and sub~range in the number range, like as "1%~3%", "2%~4%", "3%~5%". The theory is also applied to number range defined by one figure. Furthermore, the theory is applied to whatever data range with any width and whatever kind of characteristic. Unless it conflicts with context, the first and the second in this disclosure mean to differentiate different subject, not to mean order or sequence in time or place.

In present article, including in claims, the conjunctions, such as "including", "comprising", "containing", "referring to", "accommodating", are explained as open expression, meaning "including but not limited to ". The conjunctions "is composed of" and "consisting of" are closed expression.

In order to better illustrate the present disclosure, much more details are provided in following embodiments. The one with ordinary skill in the art may understand that present disclosure can be implemented without certain details. In embodiments, some methods, tools, instruments are not described in detail so as to focus on main content of present disclosure.

On the premise of no conflict, the technical characteristics disclosed in present embodiments can be combined in any possible way, the new embodiment obtained accordingly still falls in the scope of present disclosure.

In some embodiments, the method for preparing the large size molybdenum powder comprises: large size β-type ammonium tetramolybdate monocrystal particle with size between 5~100pm is sintered at temperature of 350~400°C, molybdenum trioxide is formed; the molybdenum trioxide is transformed to molybdenum powder after two-stage hydrogen reduction, and the particle size of the molybdenum powder is larger than 5µm. In this disclosure, the size of large size β-type ammonium tetramolybdate monocrystal particle being 5~100µm refers to its crystalline grain size being 5~100µm.

By conducting TG-DSC test on β-type ammonium tetramolybdate monocrystal, inventor found that TG curve of the β-type ammonium tetramolybdate monocrystal has only one mass loss platform, DSC curve of the β-type ammonium tetramolybdate monocrystal has only one endothermic peak, which shows that thermal decomposition of the β-type ammonium tetramolybdate monocrystal accomplishes in one-step without intermediate product. That is decomposition of β-type ammonium tetramolybdate monocrystal beginning at 270°C, being fierce at 330.54°C accompanying massive heat absorption, and finishing at 360°C. XRD test results show that thermal decomposition product of β-type ammonium tetramolybdate monocrystal is α-MoO₃ with layered orthogonal structure that takes {MoO₆} octahedron as its elementary unit.

In combination of results of TG-DSC and XRD test, thermal decomposition formula of β-type ammonium tetramolybdate monocrystal is:

β -(NH₄)₂Mo₄O₁₃→4MoO₃+2NH₃↑+H₂O

According to IR and Raman analysis results, inventor found that during the thermal decomposition process of β-type ammonium tetramolybdate monocrystal to MoO₃, N-H bond and -OH functional group break apart giving out NH₃ and H₂O in gas; Mo=O double bond, Mo-O single bond and Mo-O-Mo bond is retained forming layered MoO₃. Retained chemical bond keeps its original structure and characteristic. Accordingly, during thermal decomposition process, MoO₃ inherits part of the structure and characteristics of the raw material β-type ammonium tetramolybdate monocrystal.

Inventor further found that the β-type ammonium tetramolybdate monocrystal has significant morphological inheritability on product MoO₃, and the particle size of β-type ammonium tetramolybdate monocrystal has heritability on product MoO₃ within certain range. For example, when the size of β-type ammonium tetramolybdate monocrystal is between 5~ 100µm, the size of MoO₃ increases with increase of size of β-type ammonium tetramolybdate monocrystal. When the size of β-type ammonium tetramolybdate monocrystal is 100µ, the size of MoO₃ reaches maximum of 17.85µm. When the size of β-type ammonium tetramolybdate monocrystal continues to increase, the size of MoO₃ decreases instead, the inheritability is not obvious. For this reason, the size of β-type ammonium tetramolybdate monocrystal may be controlled between5~100µm, to prepare large size MoO₃.

Generally, two-stage hydrogen reduction comprises the first stage hydrogen reduction of MoO₃ to MoO₂ and the second stage hydrogen reduction of MoO₂ to Mo. Inventor further found that in the two-stage hydrogen reduction process, the first stage hydrogen reduction follows core-rupture model, and MoO₃ has no morphological inheritability on product MoO₂, the second stage hydrogen reduction abides by core-reduction model, and MoO₂ has significant morphological inheritability on product Mo powder. Consequently, MoO₃ has morphological inheritability on the size of MoO₂ and Mo powder, the bigger the size of MoO₃, the bigger the size of MoO₂ and Mo powder. For example, MoO₃ with size of 17.85µm transforms after two-stage hydrogen reduction to Mo powder with size of 6.39 µm, which is four times the size of Mo powder prepared from industrial ammonium molybdate under same reduction condition.

In some alternative embodiments, method for preparing large size β-type ammonium tetramolybdate monocrystal particle comprises: industrial ammonium molybdate, ammonia, de-ionized water is used to prepare ammonium molybdate solution with concentration of 0.2~0.6 g/ml; pH of the ammonium molybdate solution is adjusted to 1~2, temperature of the ammonium molybdate solution is adjusted to the first temperature of 70~90°C to obtain the first ammonium molybdate solution; The first ammonium molybdate solution is stirred at the first temperature for 3~5mins, constant temperature crystallizing and filtering to obtain the β-type ammonium tetramolybdate crystal seed; industrial ammonium molybdate, ammonia, and de-ionized water are used to prepare ammonium molybdate solution with the concentration of 0.2~0.6 g/ml; the pH of the ammonium molybdate solution is adjusted to 5~7, the temperature of the ammonium molybdate solution is adjusted to 70-90 °C, the second ammonium molybdate solution is obtained; the β-type ammonium tetramolybdate crystal seed is placed in the second ammonium molybdate solution, standing at room temperature, the β-type ammonium tetramolybdate crystal seed grows into the large size β-type ammonium tetramolybdate monocrystal particle with size between 5~100µm.

Generally, in the crystallization process of ammonium tetramolybdate, crystallization rate has more important effect on controlling of crystal form. If crystallization rate is too fast, crystallization process is difficult to manipulate resulting in formation of ammonium tetramolybdate in multiple crystal form, and too fast crystallization rate and too long crystallization time lead to much more crystalline grains coming into being in solution. These much more crystalline grains get to bond together forming bulky pseudo-particle. Molybdenum in ammonium molybdate solution adheres to the bulky pseudo-particle and forms surface coating layer, bringing about fuzzing of the crystal boundary and formation of mainly ammonium molybdate polycrystalline. If the concentration of the first ammonium tetramolybdate solution is controlled to 0.2~0.6 g/ml, the pH of the first ammonium molybdate solution is adjusted to 1~2, the temperature of the first ammonium molybdate solution is modulated at 70-90 °C, the crystallization rate is under good control during constant temperature crystallization process. Crystallization time is further modulated to prevent growing up of crystalline grain. Constant temperature crystallization goes on 3~5 minutes, crystalline grain in the second ammonium molybdate solution is taken out quickly to be separated from the first ammonium tetramolybdate solution, the crystallization process stops and β-type ammonium tetramolybdate is obtained. No other crystal forms of ammonium tetramolybdate formed.

In some preferred alternative embodiments, the temperature of the first ammonium molybdate solution is controlled to 80~90°C. The temperature of the first ammonium molybdate solution is also called the first temperature in this disclosure.

In some alternative embodiments, nitric acid is used to adjust pH of the first ammonium molybdate solution to 1~2, nitric acid is used to adjust pH of the second ammonium molybdate solution to 5~7.

In some alternative embodiments, method for preparing large size molybdenum powder further comprises drying β-type ammonium tetramolybdate crystal seed obtained at the temperature of not exceeding 60°C.

In some alternative embodiments, particle size of industrial ammonium molybdate is 0.7 ~ 1.1 µm, D50 particle size is 0.99 µm.

In some alternative embodiments, the method for preparing the large size β-type ammonium tetramolybdate monocrystal particle includes: obtained β-type ammonium tetramolybdate product is put in crystallization container as crystal seed, the second ammonium molybdate solution with concentration of 0.2~0.6 g/ml, pH of 5~7, temperature of 70~90°C, is poured into the crystallization container forming crystallization system. The crystallization system is standing still at room temperature, the first ammonium molybdate solution cooling naturally and the crystal seed in the second ammonium molybdate solution grows into large size β-type ammonium tetramolybdate monocrystal particle, the size of which reaches at centimeter level. Normally the crystallization system consists of the second ammonium molybdate solution and β-type ammonium tetramolybdate crystal seed in the second ammonium molybdate. Normally speaking, during crystallization ammonium molybdate solution might be in three states: stable state, metastable state and unstable state. If ammonium molybdate solution is in stable state, the solution is unsaturated and concentration of the solution is smaller than equilibrium concentration, on this occasion, crystallization does not happen in unsaturated ammonium molybdate solution. If ammonium molybdate solution is in unstable state, concentration of the solution is higher than equilibrium concentration, on this occasion, crystallization happens immediately in unstable ammonium molybdate solution. If ammonium molybdate solution is in metastable, the solution is in saturation critical state, and concentration of the solution equals to equilibrium concentration, on this occasion, spontaneous nucleation does not occur. If there were crystal nucleus in metastable ammonium molybdate solution, the crystal nucleus serve as crystal seed and grow into crystal particle with solute of the solution attaching to the crystal seed. Therefore, β-type ammonium tetramolybdate particles is able to be distributed in metastable ammonium molybdate solution serving as crystal seed, the β-type ammonium tetramolybdate crystal seed continues to grow under appropriate conditions, meanwhile preventing the appearance of new β-type ammonium tetramolybdate crystal nucleus. Finally, β-type ammonium tetramolybdate with single crystal form is obtained. Generally the concentration of the second ammonium molybdate solution suitable for growth of β-type ammonium tetramolybdate crystalline is 0.2~0.6 g/ml, pH is 5~7, temperature is 70~90°C. The β-type ammonium tetramolybdate crystalline is usually distributed separately in the second ammonium molybdate solution, which is standing still at room temperature, evaporating naturally, molybdenum ion keep precipitating on the crystal seed, the crystal seed grows into the large size ammonium tetramolybdate monocrystal particle with larger size. Normally speaking, with increase of growth time, crystal size of large size ammonium tetramolybdate monocrystal increases; and particle size of the large size ammonium tetramolybdate monocrystal particle increases, where the particle size is at centimeter level.

Normally, in order to control the growth of the large size β-type ammonium tetramolybdate monocrystal particle, and take good control of specific size of the monocrystal particle, quantity of β-type ammonium tetramolybdate crystal seed in the second ammonium molybdate solution needs to be strictly controlled, usually small quantity of the β-type ammonium tetramolybdate crystal seed is propitious to growth of large size β-type ammonium tetramolybdate monocrystal particle. Furthermore, the β-type ammonium tetramolybdate crystal seed needs to be separately distributed in the second ammonium molybdate solution to prevent mutual interference of the crystal seeds during growth. As one example, screen mesh is utilized for distributing the β-type ammonium tetramolybdate crystal seed separately on the bottom surface of the crystallization container.

In some alternative embodiments, the second ammonium molybdate solution is supplemented into crystallization system to make up consumption of the ammonium molybdate solute of the second ammonium molybdate solution of crystallization system due to crystal growth, availing of growth of larger size β-type ammonium tetramolybdate monocrystal particle. Generally the supplemented second ammonium molybdate solution is the same as the second ammonium molybdate solution originally forming the crystallization system, namely, having the same constitution, concentration, pH and temperature. In some alternative embodiments, the second ammonium molybdate solution is supplemented several times.

In some alternative embodiments, the second ammonium molybdate solution is prepared as follows: industrial ammonium molybdate, ammonia and de-ionized water are used for preparing ammonium molybdate solution with concentration of 0.2~0.6 g/ml; nitric acid is used to modulate the pH of ammonium molybdate solution at 5~7, solution temperature is modulated at the second temperature of 70~90°C, and the second ammonium molybdate solution is obtained. Usually the temperature of the second ammonium molybdate solution is also called the second temperature.

In some preferred alternative embodiments, the temperature of the second ammonium molybdate solution is controlled at 80~90°C.

In some alternative embodiments, the first temperature of the first ammonium molybdate solution is controlled to be the same as the second temperature of the second ammonium molybdate solution.

In some alternative embodiments, two-stage hydrogen reduction comprises: the first stage hydrogen reduction: the molybdenum trioxide being reduced by wet hydrogen at the first temperature of 500~650°C, with the hydrogen flow rate of 100~200ml/min, wet hydrogen temperature of 40~60°C; the second stage hydrogen reduction: product from the first stage reduction being reduced by wet hydrogen at the second temperature of 900~1050°C, with the hydrogen flow rate of 100~200ml/min, wet hydrogen temperature of 40~60°C.

Inventor found in research that the size of product of the first stage hydrogen reduction depends mainly on four factors, reduction temperature, thickness of raw material, hydrogen flow rate and wet hydrogen temperature. Weight coefficient of these four factors on size of MoO₂ decrease sequentially as follows: reduction temperature>thickness of raw material>wet hydrogen temperature>hydrogen flow rate. Therein, reduction temperature affects the size of MoO₂ the most, the higher the reduction temperature, the lager the size of MoO₂. With the increase of thickness of raw material, the size of MoO₂ increases. With the increase of hydrogen flow rate, the size of MoO₂ increases first and then decreases. With the increase of wet hydrogen temperature, the size of MoO₂ decreases first and then increases.

Generally, in the first stage hydrogen reduction process, when reduction temperature is higher, reduction reaction proceeds faster and more completely. The reduction of molybdenum trioxide to molybdenum dioxide can be completely achieved when first hydrogen reduction temperature is 500~650°C. If the reduction temperature is lower than 500°C, the reduction is not complete. If reduction temperature is higher than 650 °C, molybdenum trioxide is over-reduced and molybdenum powder is formed. In preferred alternative embodiments, the first hydrogen reduction temperature can be any one between 600~650°C,such as 600°C, 610°C, 620°C, 630°C, 640°C, 650°C.

Generally, in the first stage hydrogen reduction process, the reduction rate is also related to thickness of raw material. When the thickness is larger, the reduction rate is slower. Normally molybdenum trioxide is reduced completely to molybdenum dioxide when the thickness of molybdenum trioxide raw material is less than 40mm. For example, the thickness of molybdenum trioxide raw material is selected as 30~40mm. In some preferred alternative embodiments, thickness of molybdenum trioxide raw material is any one between 32~38mm, such as 32mm, 33 mm, 34 mm, 35 mm, 36 mm, 37 mm, 38mm.

Generally, in the first stage hydrogen reduction process, when the hydrogen flow rate is higher, the reduction rate is higher. Hydrogen flow rate of higher than 100 ml/min guarantees expected reduction rate. For example, if hydrogen flow rate is set as 100~200ml/min, appropriate reduction rate is guaranteed, and cost of production is lowered. As comparatively preferred alternative embodiments, the hydrogen flow rate is controlled between 120 ~ 160ml/min, any one among which is applicable, such as 120ml/min, 130ml/min, 140ml/min, 150ml/min, 160ml/min.

Generally, in the first stage hydrogen reduction process, the greater the humidity of hydrogen, the smaller the reduction rate. Temperature of wet hydrogen selected as 40~60°C assures expected reduction rate.

Generally, in the first stage hydrogen reduction process, on the premise of raw material being reduced completely, particle size increases as large as possible by controlling reduction time; for example, reduction time may be set over 2h.

Inventor found in research that in the second stage hydrogen reduction process, the size of the reduction production depends mainly on four factors: reduction temperature, thickness of material, hydrogen flow rate and wet hydrogen temperature. Weight coefficient of these four factors on the size of Mo powder decrease sequentially as follows: reduction temperature> thickness of material>hydrogen flow rate>wet hydrogen temperature. Therein, the reduction temperature affects size of Mo powder the most, the higher the reduction temperature, the lager the size of Mo powder. With increase of the thickness of material, the size of Mo powder decreases at first, and then increases. With increase of hydrogen flow rate, the size of Mo powder increases first and then decreases. With increase of wet hydrogen temperature, the size of Mo powder decreases.

Generally, in the second stage hydrogen reduction process, when the reduction temperature is higher, reduction reaction proceed faster and more completely. The reduction of molybdenum dioxide to molybdenum metal is completely achieved when the second hydrogen reduction temperature is higher than 900 °C . In comparatively preferred alternative embodiments, the second stage hydrogen reduction temperature is any one between 950~ 1050°C, such as 950°C, 970°C, 990°C, 1010°C, 1030°C, 1050°C.

Generally, in the second stage hydrogen reduction process, reduction rate is also related to thickness of material. When the thickness is bigger, the reduction rate is slower. Normally molybdenum dioxide is reduced completely to molybdenum when the thickness of molybdenum dioxide material is less than 20mm. For example, the thickness of molybdenum dioxide raw material is selected as 11~20mm. In some comparatively preferred embodiments, the thickness of molybdenum dioxide material is any one between 14~20mm, such as 14mm, 15mm, 16mm, 17mm, 18mm, 19mm, 20mm.

Generally, in the second stage hydrogen reduction process, when hydrogen flow rate is higher, reduction rate is higher. When hydrogen flow rate is set higher than 100 ml/min, expected reduction rate is achieved. For example, if hydrogen flow rate is set as 100~ 200ml/min, appropriate reduction rate is guaranteed, and cost of production is lowered. In comparatively preferred alternative embodiments, hydrogen flow rate is controlled between 120 ~ 160ml/min, any one among which is applicable, such as 120ml/min, 130ml/min, 140ml/min, 150ml/min, 160ml/min.

Generally, in the second stage hydrogen reduction process, the greater the humidity of hydrogen, the smaller the reduction rate. Selecting temperature of wet hydrogen as 40~60°C assures expected reduction rate being obtained.

Generally, in the second stage hydrogen reduction process, on the premise of material molybdenum dioxide being reduced completely, particle size increases as large as possible by controlling reduction time, for example, reduction time is set longer than 4h.

Technical details are to be exemplarily described further in following embodiments.

### Embodiment 1

The large size β-type ammonium tetramolybdate monocrystal particle is adopted to prepare molybdenum metal, the preparation method comprises:
(1) Certain amount of the large size β-type ammonium tetramolybdate monocrystal particle with size of 100µm) is sintered at temperature of 350°C, for 30min to obtain the molybdenum trioxide powder;
(2) The molybdenum trioxide powder obtained in step (1) is put in hydrogen reduction furnace to conduct two-stage hydrogen reduction, therein:
   In the first stage reduction process, the molybdenum trioxide powder is reduced by wet hydrogen at temperature of 650 °C, thickness of raw material is 35mm, wet hydrogen temperature is 40~60°C, hydrogen flow rate is 150ml/min, and reduction time is 2h. When reduction time is up, the product obtained cools in furnace and molybdenum dioxide powder is obtained.

In the second stage reduction process, molybdenum dioxide powder obtained is reduced by wet hydrogen at temperature of 1050°C, thickness of material is 20mm, wet hydrogen temperature is 40°C, hydrogen flow rate is 150ml/min, and reduction time is 4h. When the reduction time is up, the product obtained cools in furnace and molybdenum powder is obtained.

For the method in embodiment 1, calcination process takes place in tubular sintering furnace, reduction process takes place in hydrogen reduction furnace. Material is deployed in crucible to form predetermined thickness, and the crucible is separately placed in sintering furnace and reduction furnace to conduct sintering process and reduction process in sequence. Hydrogen flows through Erlenmeyer flask heated in water bath, the hydrogen together with certain amount of steam becomes wet hydrogen, the wet hydrogen flows into reduction furnace to participate in reduction process.

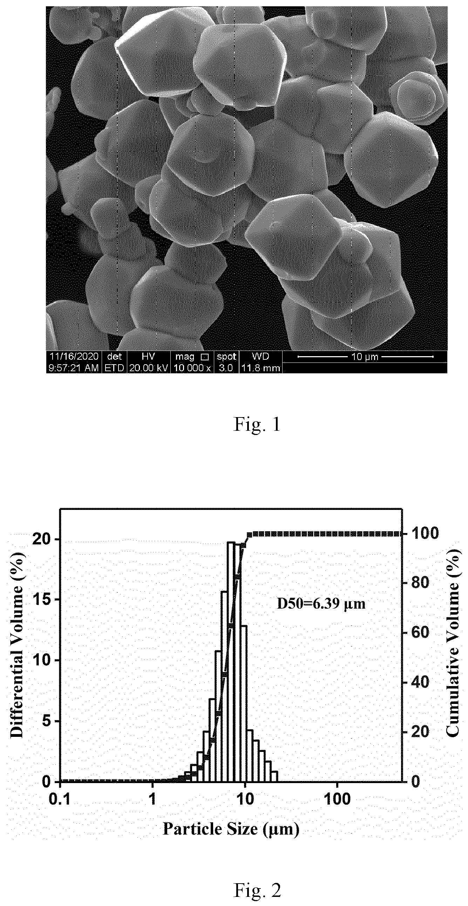

Lowering temperature of reduction furnace to room temperature and taking out molybdenum powder to carry out morphology and size test. Fig.1 is SEM image of the molybdenum powder of embodiment 1. Fig. 2 is particle size distribution of the molybdenum powder of embodiment 1, horizontal ordinate is particle size, in unit of µm, left vertical ordinate is differential volume percentage, in unit of %, right vertical ordinate is cumulative volume percentage, in unit of %; D50 size of molybdenum powder is 6.39µm.

### Comparative Embodiment 1

Industrial ammonium molybdate is used to prepare molybdenum powder, preparation method refers to embodiment 1. D50 Size of industrial ammonium molybdate is 0.99µm.

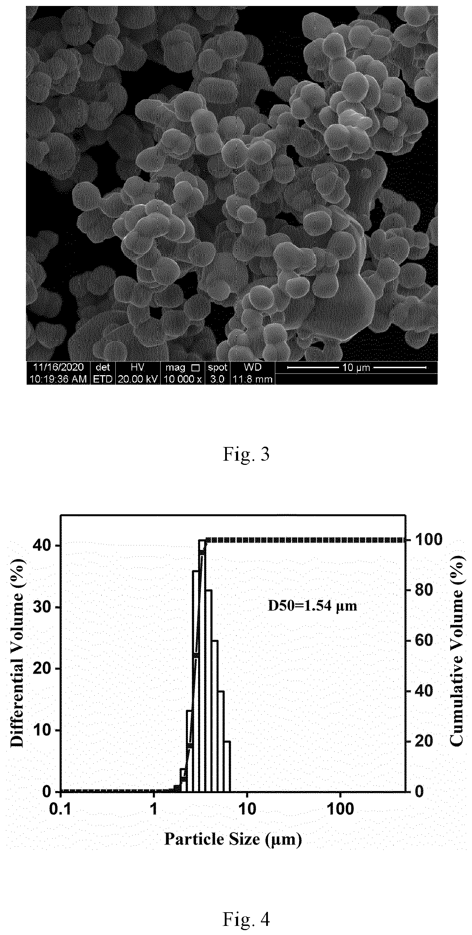

Fig. 3 is SEM image of the molybdenum powder of comparative embodiment 1. Fig. 4 is particle size distribution of the molybdenum powder of comparative embodiment 1, horizontal ordinate is particle size, in unit of µm, left vertical ordinate is differential volume percentage, in unit of %, right vertical ordinate is cumulative volume percentage, in unit of %; D50 size of molybdenum powder is 1.54µm.

From data of embodiment 1 and comparative embodiment 1, it is known that size of Mo powder of embodiment 1 is over 4 times that of Mo powder of comparative embodiment 1. It approves that size of Mo powder is small when industrial ammonium molybdate is used as raw material; the Mo powder prepared using β-type ammonium tetramolybdate monocrystal particle as raw material carry on its large size characteristics, size of Mo powder obtained is also large.

### Embodiment 2

### Preparation of large size β-type ammonium tetramolybdate monocrystal particle

The method in embodiment 2 for preparing large size β-type ammonium tetramolybdate monocrystal particle comprises steps:
(1) Getting certain amount of industrial ammonium molybdate, together with ammonia and de-ionized water, to prepare ammonium molybdate solution with concentration of 0.5 g/ml;
(2) Adding nitric acid well distributed in the ammonium molybdate solution until the pH is 2, and then heating the ammonium molybdate solution to temperature of 80°C, forming the first ammonium molybdate solution; the first ammonium molybdate solution is stirred and crystallized at constant temperature of 80°C at rate of 100 r/min for 5 min;
(3) The crystallized first ammonium molybdate solution obtained in step (2) is filtered while it is still hot, and β-type ammonium tetramolybdate is formed;
(4) The β-type ammonium tetramolybdate obtained in step (3) is put in vacuum drying oven and dried at 50°C, β-type ammonium tetramolybdate crystal seed is obtained;
(5) The β-type ammonium tetramolybdate crystal seed obtained in step (4) is distributed separately by using of screen mesh in culture plate;
(6) Getting certain amount of industrial ammonium molybdate, together with ammonia and de-ionized water, to prepare ammonium molybdate solution with concentration of 0.5 g/ml; adding nitric acid well distributed in the ammonium molybdate solution until the pH is 5, and then heating the ammonium molybdate solution to temperature of 80°C, forming the second ammonium molybdate solution; the second ammonium molybdate solution is then poured into the culture plate loaded with β-type ammonium tetramolybdate crystal seed. The culture plate is standing still at room temperature, naturally cooling, the second ammonium molybdate solution is evaporating slowly, and the β-type ammonium tetramolybdate crystal seed is continuing to grow up, finally, the large size β-type ammonium tetramolybdate monocrystal particle is obtained;

The large size β-type ammonium tetramolybdate monocrystal particle obtained in step (6) is taken out using tweezers and the solution on the particle is sucked dry by Airlaid paper, and the particle is put in clean environment for natural air-drying. XRD and SEM are used to analyze the particle.

In embodiment 2, the step (6) is repeated, the products in culture plate are collected at different time of 6h, 12h, 24h, 36h, 48h, β-type ammonium tetramolybdate monocrystal particle with different size is obtained.

In embodiment 2, industrial ammonium molybdate, ammonia and de-ionized water are used to prepare ammonium molybdate solution with the concentration of 0.2~0.6 g/ml. Then, part of the ammonium molybdate solution is used to prepare the first ammonium molybdate solution by adjusting pH and temperature; part of the ammonium molybdate is used to prepare the second ammonium molybdate solution by modulating the pH and the temperature. The concentration of the first ammonium molybdate solution is the same as that of the second ammonium molybdate solution.

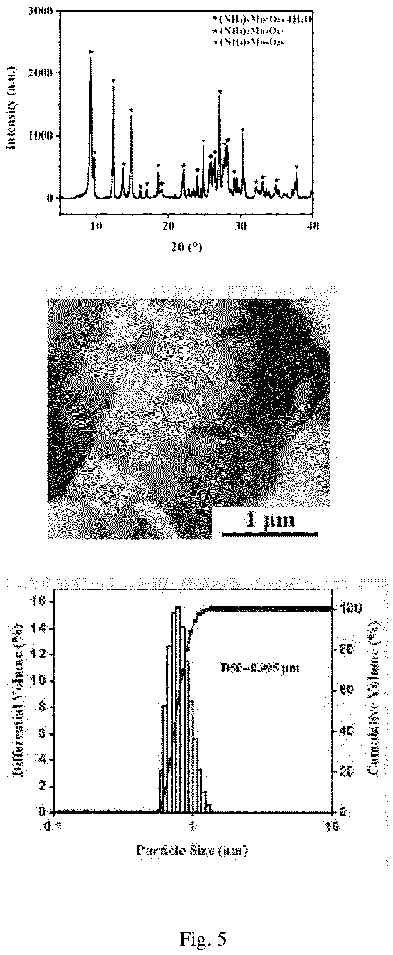

Fig.5 is topographic image of industrial ammonium molybdate in embodiment 2, therein, the above is XRD spectrum of industrial ammonium molybdate, the middle is SEM picture of industrial ammonium molybdate, the bottom is laser particle size distribution of industrial ammonium molybdate. Results show that particle size of industrial ammonium molybdate crystalline grain is between 0.7 ~ 1.1µm, D50 particle size is 0.99µm, and the ammonium molybdate has multiple crystal forms.

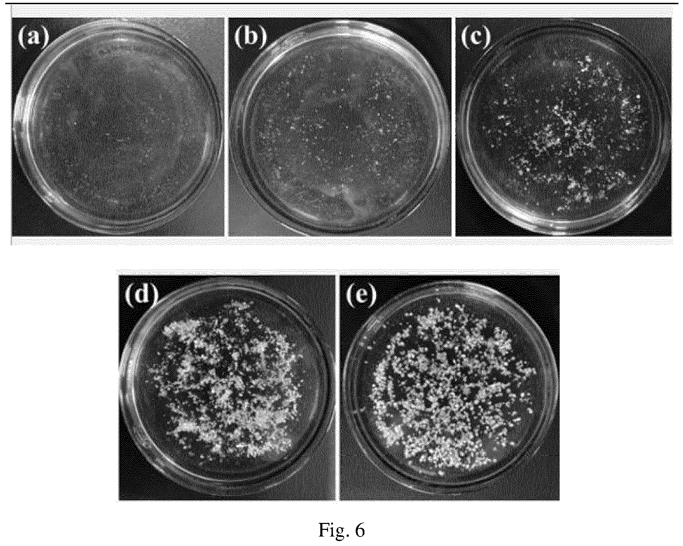

Fig. 6 is schematic images of different growth stages of large size β-type ammonium tetramolybdate monocrystal particle in embodiment 2, displaying the morphology of large size β-type ammonium tetramolybdate monocrystal particle in different growth time, therein, the picture of (a) , (b) , (c) , (d) , (e) separately correspond to crystallization time of 6 h, 12h, 24h, 36h, 48h. It can be seen that with the growth time getting longer, the particle size of the β-type ammonium tetramolybdate monocrystal particle gets bigger, the amount of the β-type ammonium tetramolybdate monocrystal particle increases.

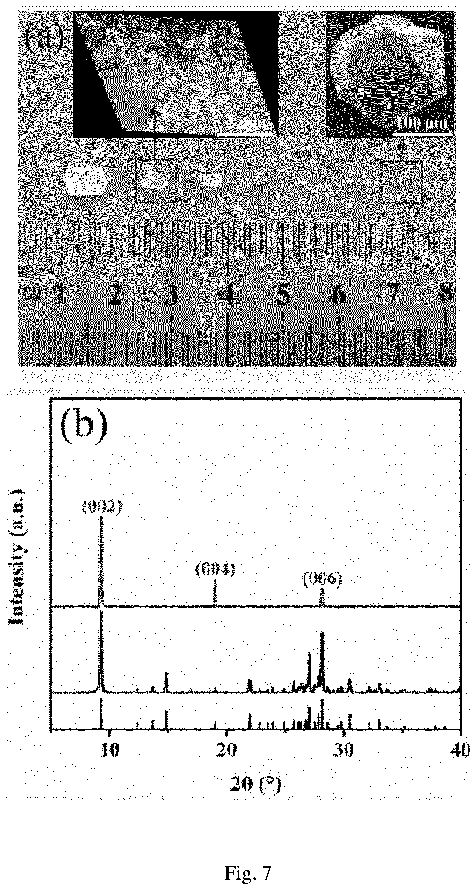

Fig.7 is topographic images of large size β-type ammonium tetramolybdate monocrystal particle in different growth stages, therein picture (a) is morphology picture of β-type ammonium tetramolybdate monocrystal particle with different size. The size of the first β-type ammonium tetramolybdate monocrystal particle on the left estimated from the scale in the picture is 9 mm. the size of the second large size β-type ammonium tetramolybdate monocrystal particle estimated from the scale in the picture is 5mm, the morphology is displayed as picture pointed by the corresponding arrow. The size of the third large size β-type ammonium tetramolybdate monocrystal particle is 4mm. The size of the fourth large size β-type ammonium tetramolybdate monocrystal particle is 3mm. The size of the fifth large size β-type ammonium tetramolybdate monocrystal particle is 2mm. The size of the sixth large size β-type ammonium tetramolybdate monocrystal particle is 1.6mm. The size of the seventh large size β-type ammonium tetramolybdate monocrystal particle is 0.8 mm. The size of the large size ammonium tetramolybdate monocrystal particle decreases from left to right in the picture. The size of the first large size ammonium tetramolybdate monocrystal particle on the right is 0.2mm, its morphology is demonstrated in picture pointed by corresponding arrow. It can be seen that the monocrystal has regular geometric shape, polyhedral morphology with flat crystallographic plane and straight crystal edge; enlarged picture shows that there are obvious ribbon structures on the crystal plane, and the crystal grain has certain angle, it can be approved that the β-type ammonium tetramolybdate obtained is monocrystal particle. Image (b) is the XRD spectrum of β-type ammonium tetramolybdate, therein, the above spectrum is standard spectrum of β-type ammonium tetramolybdate, and the middle spectrum is that of β-type ammonium tetramolybdate polycrystalline, the bottom spectrum is that of β-type ammonium tetramolybdate monocrystal. Normally when growth time is less than 6h, like as 1 ~5h, the β-type ammonium tetramolybdate monocrystal particle with size less than 200µm is obtained, like as 5~100µm. Due to invisibility of less size monocrystal particle by naked eye, they are not listed in Fig. 6 and Fig.7.

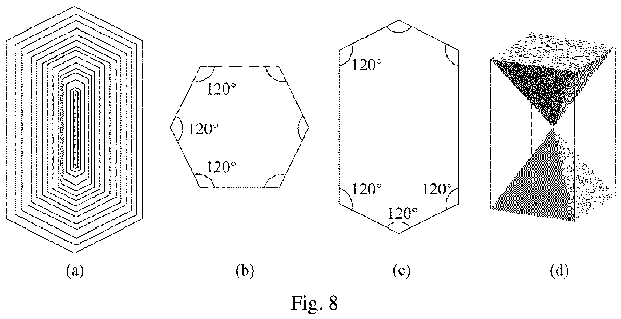

From Fig7, it is known that β-type ammonium tetramolybdate monocrystal particle obtained has polyhedral morphology with flat crystallographic plane and straight crystal edge; enlarged picture shows that there are obvious ribbon structures on the crystal plane, and the crystal particle has certain angle, the phenomenon conforms to layer growth theory. Fig.8 is schematic diagram of layer growth theory of monocrystal particle. According to the theory of layer growth, crystal is easy to grow into polyhedral structure with flat crystallographic plane and straight edge. During crystal growth process, due to effect of its environment, crystal growing in different time demonstrates some subtle changes in constitution and physical characteristics. Accordingly, some ribbon structures appear on surface of crystal, as showed in Fig. 8 (a). Due to parallel growth of crystallographic plane towards outside, angle between different crystallographic planes remains the same for the same compound, as showed in Fig 8. (b) and Fig8. (c). During the growth process of crystal, large quantity of crystallographic plane grow towards outside forming conical body with center of crystal as its pinnacle. The conical body is named growth cone, as showed in Fig. 8(d).

Test results of embodiment 2 show that the large size β-type ammonium tetramolybdate monocrystal particle prepared by using industrial ammonium molybdate has single crystal form, and the size of the β-type ammonium tetramolybdate monocrystal particle is controlled, and the large size of β-type ammonium tetramolybdate monocrystal particle is prepared.

By method disclosed in embodiments, taking advantage of morphological inheritability during reduction of β ammonium tetramolybdate, taking large size β ammonium tetramolybdate monocrystal particle as raw material, raw material is processed by calcination and two-stage hydrogen reduction, molybdenum powder with size of larger than 5µm is obtained. Meanwhile, industrial ammonium molybdate is used as raw material to controllably obtain the large size β ammonium tetramolybdate monocrystal particle with size of 5~100µm. The method process is simple and easy to operate, has promising application in molybdenum additive manufacturing.

The technique details provided in present disclosure and embodiments only serve as illustrating the inventive concept, not as limiting the scope of the technical solutions. Any change or substitute for the technique details without inventive step share the same inventive concept as present disclosure, and fall into the scope of protection the present claims sought.

## Claims

1. A method for preparing a large size molybdenum powder, wherein, the method comprises:
a large size β-type ammonium tetramolybdate monocrystal particle with size between 5~ 100µm) is sintered at a temperature of 350~400°C to obtain a molybdenum trioxide;
the molybdenum trioxide is transformed to a molybdenum powder by two-stage hydrogen reduction, particle size of the molybdenum powder is larger than 5µm.

2. The method for preparing the large size molybdenum powder of claim 1, wherein, the large size β-type ammonium tetramolybdate monocrystal particle is prepared by:
using industrial ammonium molybdate, ammonia, and de-ionized water to prepare ammonium molybdate solution with a concentration of 0.2~0.6 g/ml; pH of the ammonium molybdate solution is adjusted to 1~2, temperature of the solution is adjusted to a first temperature of 70~90°C to obtain a first ammonium molybdate solution;
stirring the first ammonium molybdate solution at the first temperature for 3~5min, constant temperature crystallizing and filtering to obtain a β-type ammonium tetramolybdate crystal seed;
using industrial ammonium molybdate, ammonia, and de-ionized water to prepare ammonium molybdate solution with a concentration of 0.2~0.6 g/ml; pH of the ammonium molybdate solution is adjusted to 5~7, temperature is adjusted to 70~90°C to obtain a second ammonium molybdate solution;
putting the β-type ammonium tetramolybdate crystal seed obtained in the second ammonium molybdate solution, standing at room temperature, the crystal seed grows into the large size β-type ammonium tetramolybdate monocrystal particle with size between 5~100µm.

3. The method for preparing the large size molybdenum powder of claim 2, wherein, the pH of the first ammonium molybdate solution is adjusted to 1~2 by nitric acid, the pH of the second ammonium molybdate solution is adjusted to 5~7 by nitric acid.

4. The method for preparing the large size molybdenum powder of claim 2, further comprising drying the β-type ammonium tetramolybdate crystal seed obtained at a temperature of not exceeding 60°C.

5. The method for preparing the large size molybdenum powder of claim 2, wherein, size of the industrial ammonium molybdate is 0.7~1.1 µm, and D50 is 0.99 µm.

6. The method for preparing the large size molybdenum powder of claim 2, wherein, the first temperature of the first ammonium molybdate solution and the second temperature of the second ammonium molybdate solution are controlled to be the same.

7. The method for preparing the large size molybdenum powder of claim 2, wherein the concentration of the first ammonium molybdate solution is controlled to be the same as the concentration of the second ammonium molybdate solution.

8. The method for preparing the large size molybdenum powder of claim 1, wherein, the two-stage hydrogen reduction specifically comprises:
a first stage reduction: a molybdenum trioxide is reduced by wet hydrogen at a first temperature of 500~650°C, with hydrogen flow rate of 100~200ml/min, wet hydrogen temperature of 40~60°C;
a second stage reduction: product from the first stage reduction is reduced by wet hydrogen at a second temperature of 900~1050°C, with hydrogen flow rate of 100~ 200ml/min, wet hydrogen temperature of 40~60°C.

9. A large size molybdenum powder, prepared by any one of the method for preparing the large size molybdenum powder of claim 1~8, where a size of the molybdenum powder is larger than 5µm.
